# EUROPEAN PATENT APPLICATION

(11) **EP 1 787 865 A1**
(43) Date of publication of application: **23.05.2007**
(21) Application number: 06120850.0
(22) Date of filing: 18.09.2006
(51) Int. Cl.: B60R 9/06, B60R 9/10

(54) **Bicycle holder fixable to the rear side of a vehicle**

(30) Priority: 19.09.2005 IT RM20050118 U
(71) Applicant: Finocchiaro, Carlo, 00135 Roma (IT)
(72) Inventor: Finocchiaro, Carlo, 00135 Roma (IT)
(74) Representative: Siniscalco, Fabio

(57) **Abstract**

A bicycle holder structure (1) for fixing at least one bicycle (3) to the rear side of a vehicle (2); the structure (1) comprising at least one support track (4) for said bicycle (3) and further comprising means (5, 6) for fixing said support track to the vehicle.
The fixing means include two tracts of tube (5, 6) fixed to the bottom of the support track (4), spaced apart from and substantially parallel to each other, and perpendicularly oriented relative to the main direction of extension of said track (4), Each of said tracts of tube (5, 6) can be co-axially fixed to a respective tract of tube (8, 9) provided within the body of said vehicle (2), oriented in the longitudinal direction relative to said vehicle, and having an end portion facing said rear side of the vehicle.

## Description

The present invention relates to the technical field of bicycle holders for vehicles, particularly it relates to a bicycle holder structure, of the type as defined in the preamble of the annexed claim 1, which can be applied to a vehicle rear.

Various systems and structures are known for carrying bicycles on vehicles such as cars, camper vans, and the like. These prior art structures generally comprise one or more tracks, each of which being capable of carrying the wheels of a respective bicycle. For example, a first type of structure is known to be secured to a car roof, and particularly to be applied to racks or baggage racks that are installed on a car roof. This first type of structure, though widely used, has a first problem in that lifting the bicycles to the car roof for loading them onto the bicycle holder is a difficult operation. In addition, when loaded with bicycles, these structures have the further drawback that the aerodynamic profile of the vehicle is affected, thus practically resulting in increased fuel consumption. Furthermore, in several cases, these structures are not such as to ensure a safe attachment between the bicycle and the bicycle holder.

A second known type of bicycle holder structure can be installed on a vehicle rear door. These structures are generally quite complicated to mount, and while they usually imply lifting the bicycles at a lower height than the first type described above, yet they have a problem in that the visibility through the rear window of the car is considerably reduced.

The object of the present invention is to resolve the problems cited above with reference to the prior art, particularly by proposing a bicycle holder structure that is simple, comfortable to mount and that particularly facilitates loading and securing the bicycles to the structure itself.

This object is achieved by means of a bicycle holder device as defined in the annexed claim 1 in the broadest embodiment thereof and in the dependent claims in several particular embodiments.

The invention will be better understood from the detailed description below of several embodiments thereof, which are given by way of example and thus are not to be considered limitative in any way, with reference to the annexed drawings, in which:
- Fig. 1 illustrates a first embodiment of a bicycle holder structure in accordance with the present invention;
- Fig. 2 illustrates a second embodiment of a bicycle holder structure in accordance with the present invention;
- Fig. 3 illustrates a detail of a vehicle to which a bicycle holder structure according to the present invention can be coupled; and
- Fig. 4 and 5 illustrate two preferred examples of stabilizing means, respectively, to be associated to a bicycle holder structure in accordance with the present invention.

In the figures, equal or similar elements will be designated with the same numerals.

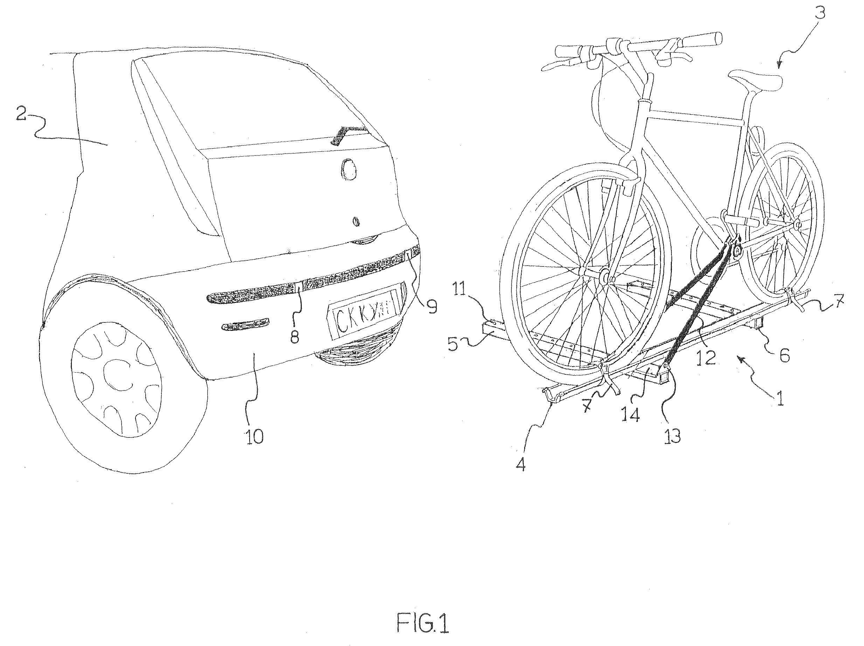

In Fig. 1, a first embodiment is illustrated of a bicycle holder structure, which is generally designated with 1, for securing a bicycle 3 to the rear side of a vehicle 2. In the particular example illustrated herein, the vehicle 2 is embodied by an economy car. However, the bicycle holder structure 1 can be also fixed to upper class cars, or more generally to other types of vehicles, such as for example, and in a non-limiting manner, vans or recreational vehicles.

The bicycle holder structure 1 comprises at least one support track 4, on which the wheels of the bicycle 3 can be rested, which can be locked to, for example, the track 4 by means of suitable belts 7 or by means of similar locking means.

The bicycle holder structure 1 further includes fixing means 5, 6 suitable to fix the bicycle holder structure 1 to the rear side of the vehicle 2.

Advantageously, these fixing means include two first tracts, or pieces, of tube 5, 6 that are fixed, e.g. welded, to the bottom of the support track 4, which are spaced and substantially parallel to each other and perpendicularly oriented relative to the main direction of extension of the track 4. In a particularly preferred embodiment, the tracts of tube 5, 6 are spaced from each other such as to have a distance between centres of tracks ranging between 70 and 90 cm and a length ranging between 45 cm and 65 cm approximately.

Each of the tube pieces 5, 6 can be co-axially fixed to a second respective tract of tube 8, 9 being provided within the body of the vehicle 2, only a respective end thereof being illustrated in Fig. 1. These second tracts of tube 8, 9 are oriented in the longitudinal direction relative to the vehicle 2, and have a respective end portion facing the vehicle rear side, and which can be preferably accessed through a matching opening, or window, that is provided in the rear bumper 10 of the vehicle 2. More preferably, these openings, which are normally closed when the bicycle holder structure 1 is not fixed to the vehicle 2, can be accessed by removing a respective cover either snugly fitted or press-fitted, which is arranged in the bumper and not illustrated in the figures.

In the embodiment illustrated in Fig. 1, the first 5, 6 and second 8, 9 tube tracts have a substantially quadrangular section and the first tube tracts have a smaller section than the section of the second tube tracts. However, sections of the first and second tracts of tube can be provided, which have a shape other than quadrangular, for example being round-shaped.

In a particularly advantageous embodiment, the two tracts of tube 8 and 9 are welded in the longitudinal direction to the vehicle frame 2 and arranged below the loading surface of the rear luggage compartment, at about the ends of the housing of the spare wheel of the vehicle 2. These tracts of tube 8 and 9 are parallel to each other and substantially horizontally arranged (i.e. they are substantially parallel to the road surface) or more preferably inclined by about 10° slope such as to have the end oriented to the bumper at a higher quota than the opposite end oriented to the front side of the vehicle 2. Preferably, the ends oriented to the bumper are in contact with the inner part of the latter.

A first plurality of through holes 11 is provided on the first tracts of tube 5 and 6 for fixing the bicycle holder structure 1 to the vehicle 2, and at least one through hole is provided on each of the second tracts of tube 8 and 9 inside the boot. Thereby, the bicycle holder 1 can be removably locked to the vehicle 2 simply using, for example, two handle screws, from within the luggage compartment after the first tracts of tube 5 and 6 have been fitted within the respective second tracts of tube 8 and 9. It should be observed that this solution allows identifying a locking position, thus allowing the distance between the vehicle 2 and bicycle holder structure 1 to be adjusted. It should be further observed that the solution providing the locking with handle screws from within the boot advantageously makes the bicycle holder structure harder to steal.

Advantageously, markings can be further provided on the outer surface of the first tracts of tube 5 and 6 in order to indicate the exact alignment position of the holes within the luggage compartment.

As shown in Fig. 1, the bicycle holder structure 1 further includes a compass locking fork 12.

The compass fork 12 allows locking the bicycle 3 in the vertical position after it has been placed (and possibly secured by means of belts 7) on the track 4.

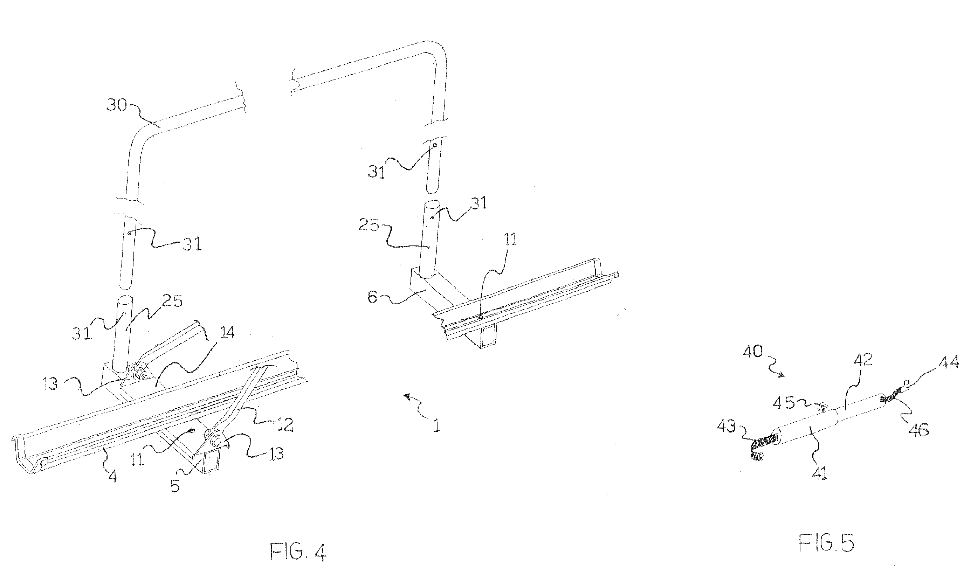

In Fig. 4, it can be seen more in detail how the compass locking fork 12 is fixed, preferably welded, to the track 4 by means of a plate 14 provided with two curved ends 13, which is fixed, preferably welded, to the tract of tube 5.

Preferably, the support track 4, the first and second tracts of tube are made of a metal material.

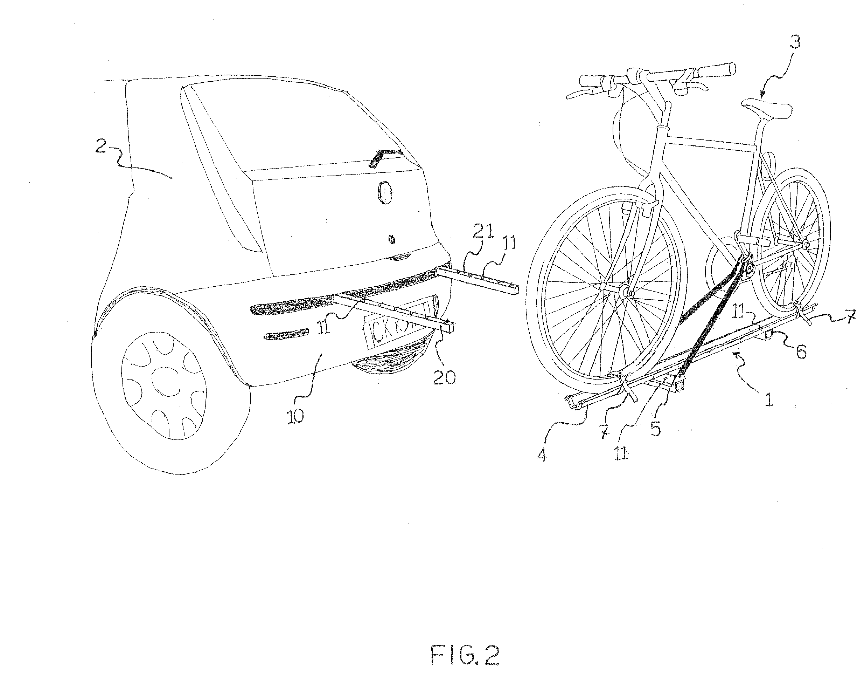

In Fig. 2, a variant embodiment is shown of the bicycle holder structure 1 in accordance with the present invention. Unlike the structure in Fig. 1, the structure in Fig. 2 has first tracts of tube 5 and 6 having a reduced length and substantially having the same section as the second tracts of tube 8 and 9 that are fixed within the vehicle body 2 (not seen in Fig. 2). In this case, further extensible tracts of tube 20 and 21 are provided, which are fitted with a series of locking holes 11 and that can be telescopically foldaway-fitted within the second tracts of tube 8 and 9 in order to fix the bicycle holder structure 1. In greater detail, the extensible tracts of tube 20 and 21, which are also preferably made of a metal material, have a first end portion that can be fitted in the first tracts of tube 5 and 6, and a second opposite end portion that can be fitted within the tracts of tube 8 and 9, which are arranged within the body of the vehicle 2. The extensible tracts of tube 20 and 21 in the extended position and retracted position can be fixed to the second tracts of tube 8 and 9 by means of handled screws that can be operated from within the luggage compartment of the vehicle 1. Similarly, a further pair of handled screws is provided, using the holes 11, for fixing the bicycle holder structure 1 to the extensible tracts of tube 20 and 21, when the latter are in the extended position relative to the vehicle 2. It should be observed that, by extending more or less the extensible tracts of tube 20 and 21, the fixing distance between the bicycle holder structure 1 and the vehicle 2 can be further adjusted.

In a particularly advantageous embodiment, hold means are provided at the ends of the extensible tracts of tube 20, 21 facing the rear side of the vehicle 2, in order to facilitate the same to be extended from the body of vehicle 2. These hold means, for example, can be embodied by an inner cylinder of the extensible tube and provided at the end of the latter facing the rear bumper 10. One can act on this cylinder to extend the inner tube 20 or 21, such as using only a hooked iron or other suitable tool as a lever.

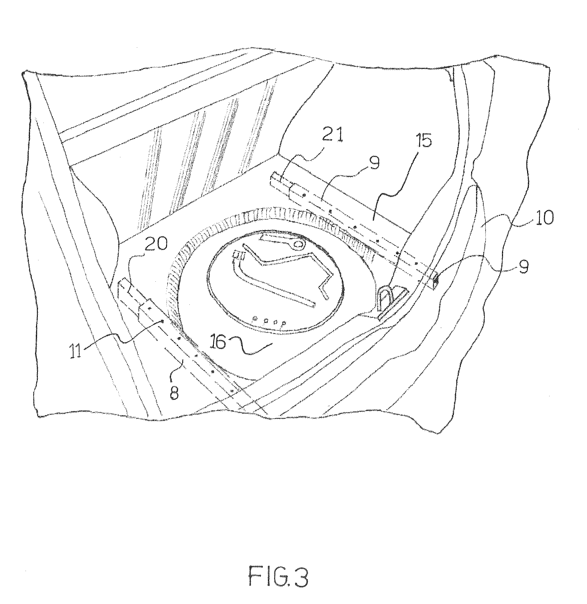

In Fig. 3, a detail is shown of the vehicle in Fig. 2 in which the extensible tracts of tube 20, 21 are seen as being fitted in the respective second tracts of tube 8, 9 fixed below the loading surface 15 of the vehicle 2 and laterally to the room provided in the boot for housing the spare wheel 16 (in this case, the surface 15 has been shown in phantom in order to disclose the tracts of tube).

In Fig. 4, a first embodiment is shown of stabilizing means 30 that can be advantageously associated with a bicycle holder structure 1 in accordance with the present invention.

The stabilizing means 30 allow preventing bicycle oscillations that may be caused by defects of the road surface and sudden braking.

In the particular embodiment in Fig. 4, the stabilizing means include a backside 30 formed by a metal tubular preferably having a rounded section and substantially U-shaped, which has end portions that can be fitted within respective vertical sleeves 25 that are fixed, for example, welded, perpendicular to the first tracts of tube 5, 6. Preferably, the length of the two arms of the U ranges between 70 and 90 cm, and preferably, the length of the two vertical sleeves 25 ranges between 10 and 20 cm.

In order to fix the backside 30 to the bicycle holder structure 1, pairs of matching holes 31 are provided on the backside 30 and both vertical sleeves 25. Thereby, the backside 30 can be made integral to the bicycle holder structure 1 using fixing means such as handled screws or pins (not shown in the figure). The bicycle to be carried may be locked to the backside 30 using known belts, not shown in Fig. 4.

In an alternative embodiment not shown in Fig. 3, the vertical sleeves 25 welded to the tracts of tube 5 and 6 may have a reduced length of about 5 cm; in this case, the U-shaped tubular structure 30, instead of being fitted on these sleeves, could be pivotally hinged thereon such as to be rotated and overturned backwards until it reaches a rest position in which this tubular structure 30 is oriented co-planar (or almost co-planar) with the support track 4. In an alternative embodiment not shown in the figures, the tubular U-shaped structure 30 could be pivotally hinged directly to the tracts of tube 5 and 6 (i.e. without the vertical sleeves 25 being provided), such as by means of locking means (one for each end of the U-shaped tubular structure) each including a pair of circular rings (of which one ring can be fixed to a tract of tube 5 or 6 and the other can be fixed to an end portion of the U-shaped tubular structure) that are held together by a pin and provided with opposite toothed surfaces suitable to interfere with each other such that the two rings, after the pin has been tightened, allow locking the U-shaped tubular structure 30 and the tracts of tube 5 and 6 in a desired position.

In a particularly advantageous embodiment, each of the tube tracts 5 and 6 is formed by two tracts of tube that are pivotally coupled to each other, such as to allow overturning in the vertical position the bicycle holder portion carrying the track 4 when the car is, for example, stopped, the bicycle holder is fixed to the car and no bicycle is loaded on the bicycle holder.

In Fig. 5, a solution of stabilizing means is described which is alternative to the stabilizing means described above with reference to Fig. 4. Particularly, the stabilizing means in Fig. 5 include a stabilizing rod 40 comprising a metal tube, or outer tube, with a round section 41, which is suitable to receive at least partially a second metal tube 42, or inner tube, of a slightly smaller diameter. In a particularly preferred embodiment, the outer tube has a diameter of about 3 cm, and a length of about 30 cm. Preferably, the inner tube 42 has about the same length as the outer tube. As illustrated in Fig. 5, a metal hook being fixed to one of the ends of the outer tube 41 has such a diameter as to be attached to a part of a bicycle frame, whereas at the opposite end of the inner tube 42 a flexible strap 46 is fixed, which is provided with a hook 44 suitable to be fitted in a slot being normally provided between the boot door and the vehicle body 2. A handled screw 45 allows the outer tube to be locked to the inner tube such as to be capable of adjusting a total length of the stabilizing rod 40 that is suitable for avoiding undesired oscillations of the bicycle to be carried.

In an alternative embodiment, not shown in the figures, the two above embodiments of stabilizing means 30 and 40 can be combined, by providing the stabilizing rod 40 to be such as to lock the bicycle frame to the U-shaped tubular structure 30, for example by providing a flexible strap 46 provided with a buckle suitable to secure the stabilizing rod 40 to the U-shaped tubular structure 30.

As may be easily understood from what has been discussed above, the objects of the invention are fully achieved. In fact, a bicycle holder structure according to the present invention advantageously allows a particularly easy loading and fixing of a bicycle to a vehicle. With a bicycle holder structure in accordance to the present invention, a considerable improvement will be further obtained in the safety conditions when bicycles are transported on board cars, thus avoiding the dangerous event that a bicycle may fall while the car is moving.

It should be also observed that, as illustrated in Fig. 3, if two stationary tubulars 8 and 9 welded to the loading surface 15 and two extensible tubulars 20, 21 telescopically accommodated within the stationary tubulars are provided in newly made cars, either the bicycle holder structure in accordance with the embodiment illustrated in Fig. 1 (in this case, only the extensible tubulars 20 and 21 will require to be taken off by removing them completely from the stationary tubulars 8 and 9), or the bicycle holder structure in accordance with the embodiment illustrated in Fig. 2 may be installed on these cars in a removable manner.

While only several particular embodiments of the present invention have been illustrated and described herein, it should be understood that a number of modifications and variations are feasible within the scope of the same inventive concept. For example, in a bicycle holder structure in accordance with the present invention a greater number of tracks may be provided to allow for the simultaneous transportation of two or more bicycles. These tracks may be either integrally fixed to each other in an individual structure and welded to the first extensible tracts of tube or alternatively separable from each other and capable of being added to a bicycle holder structure in a modular manner, such as described above with reference to Fig. 1 and 2.

## Claims

**1.** A bicycle holder structure (1) for fixing at least one bicycle (3) to the rear side of a vehicle (2), said structure (1) comprising at least one support track (4) for said bicycle (3) and further comprising means (5, 6) for fixing said support track to said vehicle,
**characterized in that**:
said fixing means include two first tracts of tube (5, 6) fixed to the bottom of said support track (4), spaced and substantially parallel to each other and oriented perpendicular to the main direction of extension of said track, each of said first tracts of tube (5, 6) being capable of being co-axially fixed to a second respective tract of tube (8, 9) being provided within the body of said vehicle (2) oriented in the longitudinal direction relative to said vehicle, and having an end portion facing said rear side of the vehicle.

**2.** The bicycle holder structure (1) according to claim 1, wherein said second tracts of tube (8, 9) are integral with the frame of said vehicle (2) and wherein said first tracts of tube (5, 6) have a smaller section relative to said second tracts of tube (8, 9) to be at least partially and bayonet-received within the latter.

**3.** The bicycle holder structure (1) according to claim 2, wherein said first tracts of tube (5, 6) can be slidably bayonet-fitted within said second tracts of tube (8, 9) to be subsequently locked thereto such as to be capable of setting a fixing distance between said support track (4) and said rear side of the vehicle (2).

**4.** The bicycle holder structure (1) according to claim 1, wherein said first tracts of tube (5, 6) can be fixed to said respective second tracts of tube (8, 9) by means of respective extensible tracts of tube (20, 21) having a first end portion capable of being fitted in said first tracts of tube (5, 6) and a second opposite end portion capable of being fitted in said respective second tracts of tube (8, 9).

**5.** The bicycle holder structure (1) according to any preceding claim, wherein said first tracts of tube (5, 6) or said extensible tracts of tube (20, 21) can be removably locked to said second tracts of tube (8, 9) by means of fixing means that can be operated from within the boot of said vehicle (2).

**6.** The bicycle holder structure (1) according to any preceding claim, further including a pivoting compass fork (12) hinged to a plate (14) interposed between said support track (4) and one of said first tracts of tube (5, 6).

**7.** The bicycle holder structure (1) according to any preceding claim, further including stabilizing means for said bicycle (3).

**8.** The bicycle holder structure (1) according to claim 7, wherein said stabilizing means include a substantially U-shaped backside (30) having end portions that can be fitted within respective vertical sleeves (25) that are fixed perpendicular to the first tracts of tube (5, 6). The bicycle holder structure (1) according to claim 7, wherein said stabilizing means include a substantially U-shaped backside (30) and having end portions that are pivotally hinged on respective vertical sleeves (25) that are fixed perpendicular to the first tracts of tube (5, 6).

**10.** The bicycle holder structure according to claim 7, wherein said stabilizing means include a stabilizing rod (40) comprising a first tube (41) suitable to at least partially receive a second tube (42), said stabilizing means further including:
- a metal hook (43) fixed to one of the ends of the first tube (41);
- a flexible strap (46) provided with a hook (44), fixed to the opposite end of the second tube (42), said hook (44) being suitable of being fitted in a slot provided between the rear door of the boot and the body of the vehicle (2).

**11.** A car (2) **characterized in that** it comprises said second tube tracts (8, 9) welded to the frame of said car, below the loading surface (15) of the luggage department of the car, for removably fixing a bicycle holder structure (1) according to any preceding claim.

**12.** The car according to claim 11, further comprising said extensible tracts of tube (20, 21), which are telescopically associated with said second tracts of tube (8, 9) for removably fixing a bicycle holder structure (1) according to claim 4.
